(19) **Europäisches Patentamt / European Patent Office / Office européen des brevets**

(11) **EP 1 556 794 B1**

(12) **FASCICULE DE BREVET EUROPEEN**

(45) Date de publication et mention
de la délivrance du brevet:
**01.08.2018 Bulletin 2018/31**

(51) Int Cl.:
***G06F 17/30*** *(2006.01)*

(21) Numéro de dépôt: **03778480.8**

(22) Date de dépôt: **27.10.2003**

(86) Numéro de dépôt international:
**PCT/FR2003/003203**

(87) Numéro de publication internationale:
**WO 2004/040472 (13.05.2004 Gazette 2004/20)**

(54) **PROCEDE DE SELECTION DE GERMES POUR LE REGROUPEMENT D'IMAGES-CLES**

VERFAHREN ZUR AUSWAHL VON CLUSTER-REPRÄSENTANTEN UM SCHLÜSSELEINZELBILDER ("KEY-FRAMES") ZU GRUPPIEREN

METHOD OF SELECTING SEEDS FOR THE CLUSTERING OF KEY-FRAMES

(84) Etats contractants désignés:
**DE FR GB**

(30) Priorité: **28.10.2002 FR 0213978**

(43) Date de publication de la demande:
**27.07.2005 Bulletin 2005/30**

(73) Titulaire: **Thomson Licensing DTV
92130 Issy-les-Moulineaux (FR)**

(72) Inventeurs:
• **KIJAK, Ewa
F-35440 Dinge (FR)**
• **OISEL, Lionel
F-35137 LA NOUAYE (FR)**
• **CHUPEAU, Bertrand
F-35700 RENNES (FR)**

(74) Mandataire: **Huchet, Anne et al
TECHNICOLOR
1-5, rue Jeanne d'Arc
92130 Issy-les-Moulineaux (FR)**

(56) Documents cités:
• **VAILAYA ET AL: "Video Clustering" TECHNICAL REPORT MSU-CPS-96-64, [en ligne] novembre 1996 (1996-11), XP002250219 Department of Computer Science, Michigan State University, MI, US Extrait de l'Internet: <URL:http://www.cse.msu.edu/cgi-user/web/tech/document?ID=299> [extrait le 2003-08-06]**
• **JAIN K J ET AL: "Algorithms for Clustering Data" ALGORITHMS FOR CLUSTERING DATA, 1988, pages 96-101, XP002086750**
• **HANJALIC A ET AL: "AN INTEGRATED SCHEME FOR AUTOMATED VIDEO ABSTRACTION BASED ON UNSUPERVISED CLUSTER-VALIDITY ANALYSIS" IEEE TRANSACTIOS ON CIRCUITS AND SYSTEMS FOR VIDEO TECHNOLOGY, IEEE INC., vol. 9, no. 8, décembre 1999 (1999-12), pages 1280-1289, XP000873451 NEW YORK, US ISSN: 1051-8215**
• **NG ET AL: "Efficient and Effective Clustering Methods for Spatial Data Mining" 20TH INTERNATIONAL CONFERENCE ON VERY LARGE DATA BASES, [en ligne] 12 - 15 septembre 1994, XP002250257 Santiago, Chile Extrait de l'Internet: <URL:http://citeseer.nj.nec.com/ng94efficient.html> [extrait le 2003-08-06]**

**EP 1 556 794 B1**

## Description

L'invention concerne un procédé de sélection de germes pour le regroupement d'images clés d'une séquence vidéo ainsi que le procédé de regroupement. Elle concerne également un procédé d'extraction automatique de plans d'intérêt dans une séquence vidéo.

Le domaine est celui de la construction d'index pour la navigation interactive intra-vidéo ou celui de la structuration vidéo, c'est à dire l'ordonnancement des plans qui permet de définir une table des matières.

Une séquence vidéo est composée de plans, chaque plan correspondant à des ruptures de prise de vue, qui peuvent eux-mêmes être regroupés en scènes. La structuration implique une étape de classification des plans. Celle-ci n'est bien sûr possible qu'à condition que le contenu de la vidéo soit structurable, par exemple dans des domaines tels que le sport, les journaux télévisés, les interviews...

Usuellement, les classes sont préalablement définies par des méthodes d'apprentissage supervisées ou non, puis les plans candidats d'une vidéo sont attachés à l'une des classes, sur la base d'une mesure de similarité.

Le document « Video Clustering » - TECHNICAL REPORT MSU-CPS-96-94 » (Novembre 1996) de VAILAYA ET AL publié par le « Department of Computer Science, Michigan State University, MI, US », (http://www.cse.msu.edu/cgi-user/web/tech/document?ID=299) traite de regroupement d'images clés de plans segmentant un clip vidéo à partir de leurs similarités.

La classification des plans est une étape fondamentale du processus de structuration de la vidéo. De nombreuses méthodes de classification et de représentation des plans sont proposées, mais peu s'attachent à l'identification de ces classes.

Par exemple, dans un contexte de création de résumé vidéo, l'article de S.Uchihashi, J.Foote, A.Girgensohn, J.Boreczsky intitulé "Vidéo Manga: Generating Semantically Meaningful Video Summaries", Proc. ACM Multimedia, Orlando, FL, pp 383-392, November 1999, décrit une méthode de regroupement hiérarchique dans l'étape de structuration de la séquence.

Le document « Algorithms for Clustering Data » de JAIN K J ET AL décrit un algorithme de sélection de germes en partitionnant un ensemble initial en plusieurs partitions et en vérifiant qu'au bout d'un certain nombre d'itérations, elles aboutissent à la même partition finale.

Le résultat est représenté sous la forme d'un arbre. A l'initialisation, chaque image de la vidéo est assignée à une classe ou cluster. Puis les images similaires sont regroupées en fusionnant itérativement les 2 clusters les plus proches à chaque étape. A la racine, on trouve le cluster maximal contenant l'ensemble des images. Par la suite le nombre de clusters désiré est sélectionné en spécifiant la distance des clusters fusionnés à leur père. Par cette méthode, les plans similaires sont regroupés, mais on ne trouve pas d'informations sur la nature des plans.

En revanche pour la structuration de journaux télévisés, comme décrit dans l'article de H.J Zhang, S.Y. Tan, S.W. Smoliar, G. Yihong intitulé "Automatic parsing and indexing of news video", Multimedia Systems, 2(6):256-265, 1995, on cherche à distinguer 2 types de plans : ceux qui se rapportent au présentateur et ceux qui concernent les reportages. Les plans du présentateur sont identifiés à l'aide de caractéristiques spatiales : typiquement, une personne au premier plan et une incrustation en haut à droite ou à gauche. La première étape consiste à définir un modèle A de l'image représentative d'un plan du présentateur. A la deuxième étape, les plans sont étiquetés comme appartenant à A ou non, à l'aide d'une mesure de similarité utilisant des descripteurs locaux, l'image-clé étant préalablement segmentée en régions. Dans cette méthode, on modélise d'abord un plan d'intérêt, puis on sélectionne tous les plans qui se rapprochent de ce modèle.

Une autre application de la sélection des plans d'intérêt est d'identifier les plans se rapportant à l'interviewé et ceux de l'interviewer dans une vidéo d'interview. Dans cette approche, par exemple décrite dans l'article de O. Javed, S. Khan, Z. Rasheed, M. Shah intitulé "A Framework for Segmentation of Interview Videos", IASTED Intl. Conf. Internet and Multimedia Systems and Applications, Las Vegas, November, 2000, on s'intéresse plus à l'information portée par les transitions entre plans, couplée à la connaissance de la structure d'une vidéo d'interview, plans alternés de l'interviewer et de l'interviewé, qu'à l'analyse du contenu de la scène. Toutefois un algorithme de détection de peau est utilisé pour déterminer le nombre de personnes dans l'image. Les questions étant typiquement plus courtes que les réponses, l'hypothèse utilisée est que les plans de l'interviewer sont parmi les plus courts. Les images-clés des N plus courts plans ne contenant qu'une personne sont corrélées pour trouver le plan le plus répétitif. On obtient ainsi une matrice NxN de corrélation dont on somme les lignes. L'image-clé correspondant à la somme maximale est alors identifiée comme l'image-clé de l'interviewer. Elle est à nouveau corrélée avec toutes les autres images pour trouver tous les plans s'y rapportant.

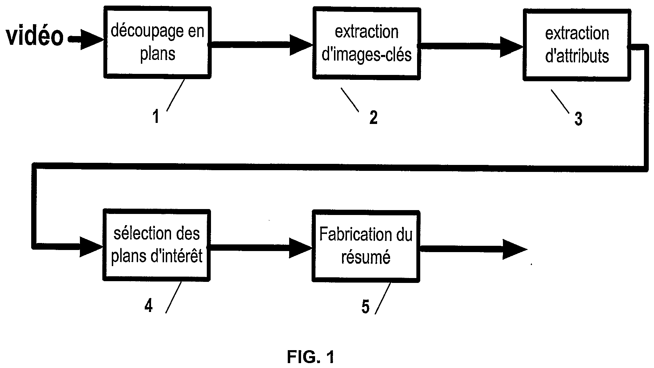

La figure 1 représente, de manière connue, un schéma général de la construction de résumés vidéo. Dans une première étape référencée 1, la séquence d'images est découpée en plans, les plans correspondant à des ruptures de prise de vue. Pour chaque plan, une ou plusieurs images caractéristiques sont sélectionnées, il s'agit d'images-clés. C'est l'objet de l'étape 2. Pour chaque image-clé, une signature est calculée à l'étape 3, utilisant des descripteurs locaux ou attributs, par exemple la couleur, les contours, la texture .... L'étape 4 effectue une sélection de plans d'intérêt en fonction de ces signatures ou attributs et un résumé est fabriqué à l'étape 5 à partir de ces plans d'intérêt.

La nature des plans d'intérêt varie en fonction de l'application visée. Par exemple, pour les journaux télévisés, il peut s'agir du présentateur. Ces plans d'intérêt correspondent souvent aux plans majoritaires, c'est à dire à une prise de vue dominante. En effet, dans certaines séquences, notamment sportives, les moments les plus intéressants sont caractérisés par une prise de vue commune et répétitive au cours de la séquence, par exemple lors d'un match de football, de tennis, de baseball....

L'invention concerne plus particulièrement l'étape de sélection des plans d'intérêt. La méthode proposée s'appuie sur la signature de chaque image-clé, associée à une métrique, afin de déterminer de façon binaire l'appartenance ou non des plans à la classe des plans d'intérêt.

Concernant le partitionnement ou « clustering », il existe de nombreux algorithmes. Parmi les plus utilisés, on trouve le K-means basé sur le calcul du barycentre des attributs ou sa variante le K-medoid qui prend en compte le point physique, c'est à dire l'image la plus proche du barycentre, qui sont des algorithmes itératifs. A partir d'une partition initiale, le K-means ou K-medoid regroupe les données en un nombre fixé de classes. Ce regroupement est très sensible à la partition initiale. D'autre part, il nécessite la fixation a priori du nombre de classes, c'est à dire une connaissance a priori du contenu de la vidéo. Dans le cas contraire, il ne garantit pas l'obtention d'un partitionnement optimal de la séquence vidéo traitée.

L'invention a pour but de pallier les inconvénients précités. Elle a pour objet un procédé de sélection de germes parmi un ensemble d'images-clés d'une séquence vidéo pour le regroupement d'images-clés de plans majoritaires de la séquence vidéo, caractérisé en ce qu'il met en oeuvre les étapes suivantes :

- tirage aléatoire de p candidats dans l'ensemble d'images-clés, p étant calculé de manière à obtenir une très bonne probabilité de tirer une image-clé d'un plan majoritaire,
- calcul du coût C pour chaque candidat, fonction de la distance des images-clés de l'ensemble à celle du candidat, la distance étant relative aux signatures,
- sélection du candidat (k1) minimisant le coût C,
- détermination d'un sous-ensemble (lk) parmi l'ensemble d'images-clés tel que les images-clés formant le dit sous-ensemble ont une distance au candidat inférieure à un seuil T, - détermination d'un germe (k2) parmi les images-clés du sous-ensemble (lk) tel qu'il minimise la fonction de coût C pour ce sous-ensemble,
- suppression des images-clés du sous-ensemble (lk) pour former un nouvel ensemble d'images-clés pour au moins un nouveau tirage aléatoire et détermination d'un nouveau germe selon les 5 étapes précédentes.

Selon une mise en oeuvre particulière, le tirage aléatoire est du type Monte-Carlo, p étant calculé par la formule de Monte-Carlo.

Selon une mise en oeuvre particulière, les images-clés sont pondérées, quant à leur signature, en fonction de la longueur des plans de la séquence vidéo qu'elles caractérisent et le tirage aléatoire est biaisé par le poids des images-clés.

L'invention concerne également un procédé de regroupement (clustering) de plans d'une séquence d'images vidéo, la séquence étant découpée en plans, un plan étant représenté par une ou plusieurs images-clés, au moins une signature ou attribut étant calculé pour les images-clés, comportant une phase de partitionnement des images-clés à partir d'une comparaison des attributs des images-clés, caractérisé en ce qu'il comporte une phase d'initialisation pour la sélection d'au moins deux images-clés ou germes à partir desquelles sont effectuées les comparaisons pour le regroupement, la sélection étant effectuée selon le procédé de la revendication 1.

Selon une mise en oeuvre particulière, le procédé est caractérisé en ce que les phases d'initialisation et de partitionnement sont réitérées, les images-clés du cluster le plus compact obtenu à l'itération précédente étant éliminées de l'ensemble traité à cette itération précédente pour fournir un nouvel ensemble sur lequel est effectuée la nouvelle itération.

L'invention concerne également un procédé de sélection de plans d'intérêt, ces plans étant majoritaires dans la séquence vidéo, caractérisé en ce qu'il met en oeuvre le procédé décrit ci-dessus, les plans d'intérêt correspondant au regroupement effectué autour du premier germe sélectionné.

Plus le nombre $n$ de germes retenus pour initialiser l'algorithme de clustering est important, plus les clusters sont compacts donc cohérents au sens de la métrique utilisée. Le nombre $n$ de germes retenus pour initialiser l'algorithme est fixé mais le nombre de classes obtenues n'est pas connu a priori.

Le procédé permet l'identification des plans majoritaires dans la séquence. Lors de la première itération, le premier cluster obtenu représente ces plans majoritaires. Les itérations suivantes permettent d'affiner la classification et de diminuer le taux de mauvaises classifications. Il est ainsi possible de retrouver l'ensemble des plans se rapportant à une prise de vue majoritaire afin d'éliminer les séquences secondaires. Dans l'hypothèse où ces plans majoritaires sont des plans d'intérêt, le procédé permet d'extraire automatiquement les plans d'intérêt de la séquence vidéo.

D'autres particularités et avantages de l'invention apparaîtront clairement dans la description suivante donnée à titre d'exemple non limitatif et faite en regard des figures annexées qui représentent

- la figure 1, un schéma général de la construction de résumés vidéo,

- la figure 2, un algorithme de sélection de germes,
- la figure 3, le résultat du clustering sur une séquence de tennis.

L'algorithme de traitement pour le partitionnement des images fonctionne en deux phases successives. La première consiste à sélectionner des plans candidats pour le regroupement, il s'agit de l'algorithme de sélection de germes. La deuxième phase a pour objet d'affecter chaque plan à l'un des groupes représentés par les germes, il s'agit de l'algorithme de classification des plans proprement dit. La phase de sélection des germes s'appuie sur l'hypothèse des plans majoritaires et assure que lors de la première itération de l'algorithme de partitionnement, un plan correspondant à la prise de vue d'intérêt est sélectionné en premier. Les plans appartenant à la classe dite d'intérêt sont alors étiquetés « plans d'intérêt », les autres « plans de non-intérêt ».

La première phase consiste en une sélection des représentants des classes « intérêt » / « non intérêt ».

L'hypothèse sur laquelle repose la sélection est que les plans appartenant à la prise de vue que nous cherchons sont majoritaires en terme de nombre d'images dans l'ensemble de la séquence. Nous faisons l'hypothèse qu'au moins la moitié des images-clés représentant nos plans correspond bien au modèle cherché.

Afin de donner plus d'importance aux plans longs et de satisfaire l'hypothèse, un coefficient représentatif de l'importance du plan, en termes de longueur relative, est attaché à chaque image-clé, pour donner plus de poids aux plans majoritaires. Ce coefficient de pondération est pris en compte dans les étapes ultérieures, notamment dans les calculs de distance. Il serait bien sûr tout aussi envisageable de rattacher plusieurs images-clés à un plan proportionnellement à la longueur de celui-ci. Dans ce cas, du fait du volume plus important de données à traiter, le temps de traitement serait augmenté.

Initialisation de l'algorithme

L'étape d'initialisation de l'algorithme de partitionnement (clustering), qui constitue elle-même l'algorithme de sélection de germes, consiste à trouver des germes pour la classification dans l'espace des signatures. Le nombre des images étant important, il est procédé par tirage aléatoire de p images-clés. Afin de s'assurer, sous l'hypothèse de plans d'intérêt majoritaires, de tirer au moins une image-clé représentative d'un plan majoritaire, le nombre p est calculé suivant la méthode d'échantillonnage de Monte-Carlo. Dans cette formule, le taux de contamination des données est biaisé par le poids des images-clés. La méthode d'échantillonnage de Monte-Carlo est connue et décrite par exemple dans l'article de P. Meer, D. Mintz, A. Rosenfeld intitulé: "Robust regression methods for computer vision : a review" - International Journal of Computer Vision, Vol:6, n°1, P. 59-70 (1991). Il faut s'assurer également de ne jamais effectuer 2 fois le même tirage. Seule une image-clé parmi les p images tirées sera retenue comme germe pour l'initialisation de l'algorithme de clustering, comme indiqué par la suite.

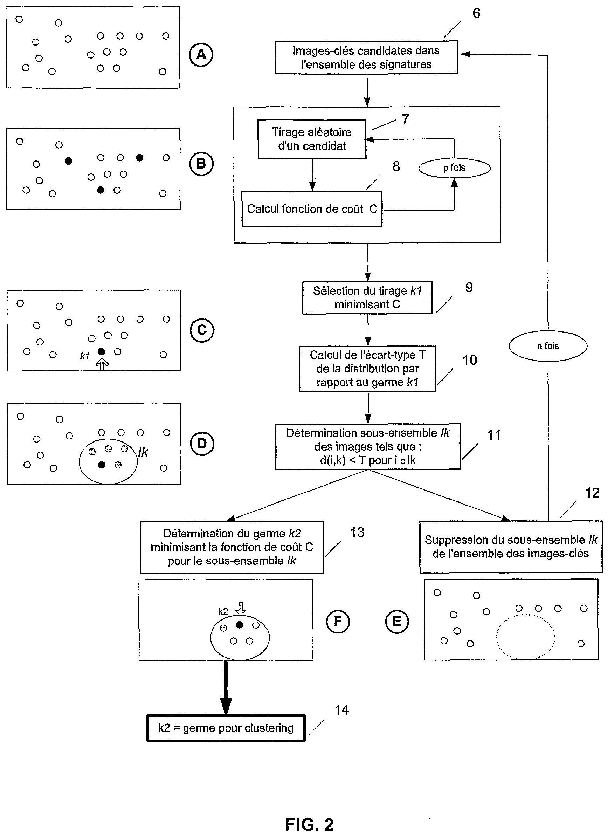

La figure 2 décrit un algorithme de sélection de n germes. Les différents rectangles référencés A à F représentent l'ensemble des images-clés tel qu'il évolue lors du traitement.

L'étape 6 regroupe l'ensemble des images-clés candidates dans l'ensemble des signatures. A l'origine, c'est à dire lors de la première itération, il s'agit de l'ensemble des images-clés de la séquence vidéo traitée. Cet ensemble est représenté par le rectangle A. Ces images sont caractérisées par leurs signatures, par exemple les couleurs dominantes qui sont les composantes d'un vecteur multidimensionnel affecté à chaque image.

L'étape suivante 7 effectue un tirage aléatoire d'un candidat suivant une méthode numérique d'échantillonnage de type Monte-Carlo. L'étape suivante 8 calcule, pour l'image tirée, son coût.

Par exemple, ce coût peut être défini par la fonction :

$$C = \Sigma\, f(e_i^2)$$

avec :

$e_i$ = distance quadratique pondérée entre la signature retenue, c'est à dire celle de l'image sélectionnée ou candidat, et la signature de l'image i de l'ensemble,

$$f(e_i^2) = e_i^2 \text{ si } e_i^2 < T^2$$

$$f(e_i^2) = T^2 \text{ si } e_i^2 \geq T^2$$

où T est l'écart type de la distribution des distances pondérées à l'image sélectionnée.

Les étapes 7 et 8 sont réitérées p fois, p étant une valeur calculée par la formule de Monte-Carlo. La valeur p correspond alors au tirage minimum permettant de garantir avec une forte probabilité qu'une image-clé représentant un plan majoritaire a été tirée. Cette probabilité dépend du taux de contamination, c'est à dire du pourcentage d'images-clés d'intérêt dans l'ensemble. Par exemple p est de l'ordre de 10 pour une probabilité de 99% et un taux de contamination minimum de 50%. Bien sûr, un tirage aléatoire selon une autre méthode peut être effectué à l'étape 7, le nombre p étant lié à cette probabilité qu'au moins une image-clé représentant un plan majoritaire a été tirée. On obtient donc p candidats, éléments représentés en noir dans le rectangle B. Parmi les p candidats auxquels sont affectés p coûts, une sélection est effectuée qui consiste à choisir le candidat k1 correspondant au coût le plus faible, c'est l'objet de l'étape 9. Etant donné les hypothèses, ce candidat correspond à l'image-clé.Cet élément est désigné par une flèche dans le rectangle C. L'étape 10 réalise un calcul de l'écart-type T de la distribution par rapport au candidat k1.

L'étape suivante 11 détermine, pour le tirage ou candidat $k_1$ retenu, le sous-ensemble $l_k$ des éléments dont la distance au candidat des signatures est inférieure à un seuil T. Il s'agit ici de l'écart-type de la distribution des distances au candidat mais ce seuil pourrait tout aussi bien être une valeur fixée a priori. Ce sous-ensemble est entouré dans le rectangle D.

La détermination du germe k2, dans le sous-ensemble lk, pour initialiser le K-médoïd, est effectuée à l'étape suivante 13. C'est l'élément du sous-ensemble lk minimisant la fonction de coût C. Il s'agit d'un minimum local. L'étape 14 mémorise ce germe k2. Ce germe est désigné par une flèche dans le sous-ensemble lk représenté dans le rectangle F.

L'itération est effectuée par rebloulcement de l'étape 11 sur l'étape 6 par l'intermédiaire d'une étape 12. Après détermination du sous-ensemble lk, étape 11, l'étape 12 élimine de l'ensemble des images-clés, les éléments composant ce sous-ensemble. L'ensemble des images-clés candidates est donc restreint en écartant les éléments du sous-ensemble lk, qui contient des images-clés trop proches du germe précédemment trouvé. Les éléments du nouvel ensemble, représenté dans le rectangle E, sont regroupés à l'étape 6 et exploités pour une nouvelle itération. Le nombre d'itérations, c'est à dire de germes sélectionnés, est fixé à n, n étant une valeur prédéfinie. L'étape 14 mémorise donc n germes k2.

Du fait de l'hypothèse, les plans recherchés étant majoritaires, les poids de chacune des images qui les représentent sont parmi les plus importants. Cela nous assure qu'ils correspondent au groupe le plus compact au sens métrique utilisé. Nous sommes alors certains que le premier germe cherché correspond à un représentant de la classe « intérêt ».

La deuxième phase consiste en la mise en oeuvre de l'algorithme de partitionnement des plans.

La partition ou groupement des plans à partir des germes est effectuée de manière classique en groupant les images-clés de signatures les plus proches de celles des germes. A chaque germe trouvé correspond un groupe. Chaque plan représenté par sa signature est attribué au germe le plus proche. Si une signature est équidistante de 2 germes ou trop distantes des germes, elle est retenue comme un nouveau germe et le partitionnement des plans recommence en tenant compte de ce nouveau germe.

Les plans ou images-clés du cluster correspondant au premier germe sont étiquetés « intérêt », les autres plans sont étiquetés « non-intérêt ».

Cette méthode n'est pas robuste dans le sens où la classification n'est pas optimale, puisqu'on oblige un plan à s'associer avec l'un des clusters prédéterminés par l'initialisation sauf dans l'un des 2 cas précédemment cités. Une mise en oeuvre particulière de l'invention consiste à réaliser une itération de l'algorithme de partitionnement permettant de rendre la méthode robuste.

Une fois tous les plans regroupés en clusters, on calcule la moyenne et écart-type de la distribution des distances au germe pour chaque cluster obtenu. Seul le cluster le plus compact est retenu. Les autres clusters sont « relâchés », c'est à dire qu'un nouvel ensemble constitué de ces seuls autres clusters est exploité pour la mise en oeuvre ultérieure des algorithmes d'initialisation et de classification. Les processus d'initialisation et de classification sont donc réitérés pour toutes les images-clés restantes. Une itération est donc effectuée à partir d'un ensemble obtenu en éliminant de l'ensemble correspondant à l'itération précédente, le cluster le plus compact trouvé lors de cette itération précédente.

Plusieurs critères d'arrêt des itérations peuvent être mis en oeuvre :

- un seul germe est sélectionné, c'est à dire que le processus d'initialisation ne génère plus qu'un germe. Les images-clés candidates traitées par l'algorithme d'initialisation sont suffisamment rapprochées pour correspondre au sous-ensemble lk et donc à un seul germe.
- les moyennes des distances intra-clusters sont presque égales. Autrement dit, une nouvelle itération de l'algorithme de partitionnement n'apportera pas d'information supplémentaire.
- il ne reste plus suffisamment d'images-clés et l'on obtiendrait des clusters unité. Les images-clés candidates sont très différentes, ne générant que des sous-ensembles lk d'une seule image.

L'algorithme a été implémenté et testé sur plusieurs séquences de tennis.

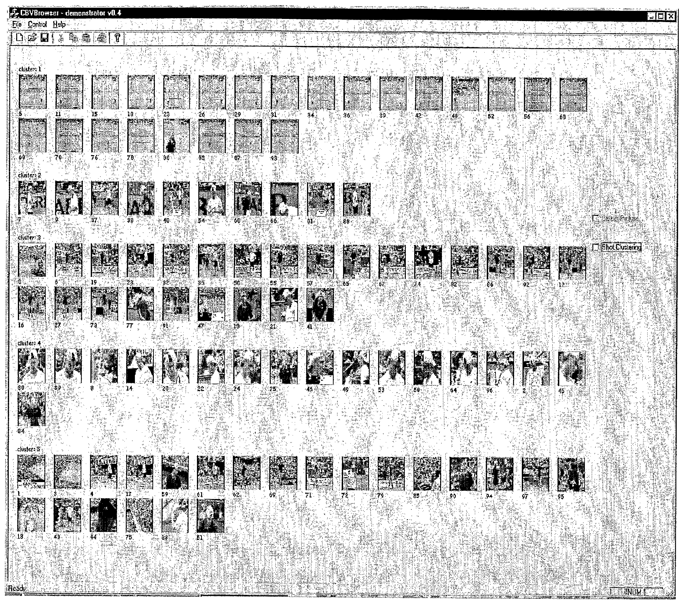

La figure 3 montre le résultat de l'algorithme de clustering sur une séquence de tennis contenant 97 plans, avec n=3.

Le cluster n°1, en haut de la figure, représente les plans intérêts, ici les vues du terrain de tennis. Les autres clusters contiennent des gros plans et des vues du public.

Les applications concernent par exemple la création d'un résumé long en concaténant les plans sélectionnés. Les plans sélectionnés peuvent également servir d'entrée à un algorithme de structuration plus complexe pouvant s'appuyer sur la connaissance a priori de la prise de vue.

Dans l'exemple décrit, la signature utilisée est un vecteur de couleurs dominantes associé à une distance quadratique simplifiée. On peut imaginer d'autres critères permettant de caractériser les séquences vidéo à partitionner, par exemple la texture, les contours...Ces critères sont choisis de manière à pouvoir caractériser des plans d'intérêt.

## Revendications

1. Procédé de sélection de germes (14) parmi un ensemble d'images-clés d'une séquence vidéo pour le regroupement d'images-clés de plans majoritaires de la séquence vidéo, **caractérisé en ce que** ladite sélection met en oeuvre les étapes suivantes :

   - calcul d'un nombre p de candidats par une méthode numérique d'échantillonnage tenant compte d'une contrainte de tirage d'au moins une image-clé d'un plan majoritaire ;
   - tirage aléatoire (7) de p candidats dans l'ensemble d'images-clés par ladite méthode d'échantillonnage,
   - calcul du coût C (8) pour chaque candidat, fonction de la distance des images-clés de l'ensemble à celle du candidat, la distance étant relative aux signatures,
   - sélection du candidat (k1) (9) minimisant le coût C,
   - détermination d'un sous-ensemble (lk) (11) parmi l'ensemble d'images-clés tel que les images-clés formant ledit sous-ensemble ont une distance au candidat inférieure à un seuil T (10),
   - détermination d'un germe (k2) (13) parmi les images-clés du sous-ensemble (lk) tel qu'il minimise la fonction de coût C pour ce sous-ensemble,
   - suppression des images-clés du sous-ensemble (lk) (12) pour former un nouvel ensemble d'images-clés pour au moins un nouveau tirage aléatoire et détermination d'un nouveau germe selon les 5 étapes précédentes.

2. Procédé selon la revendication 1, **caractérisé en ce que** le tirage aléatoire est du type Monte-Carlo, p étant calculé par la formule de MonteCarlo.

3. Procédé selon la revendication 1, **caractérisé en ce que** les images-clés sont pondérées, quant à leur signature, en fonction de la longueur des plans de la séquence vidéo qu'elles caractérisent et **en ce que** le tirage aléatoire est biaisé par le poids des images-clés.

4. Procédé selon la revendication 1, **caractérisé en ce que** le coût C est fonction des distances quadratiques entre la signature du candidat et celles des images-clés du sous-ensemble et **en ce que** T est l'écart-type de la distribution des distances des images-clés de l'ensemble au candidat.

5. Procédé selon la revendication 1, **caractérisé en ce que** la signature d'une image est relative à la couleur dominante.

6. Procédé selon la revendication 1, **caractérisé en ce que**, la séquence étant découpée en plans (1), un plan étant représenté par une ou plusieurs images-clés (2) dudit ensemble d'images-clés, et au moins un attribut étant calculé pour les images-clés (3), il met en oeuvre un partitionnement des images-clés de la séquence à partir d'une comparaison des attributs des images-clés, lesdites comparaisons étant effectuées à partir des germes sélectionnés.

7. Procédé selon la revendication 6, **caractérisé en ce que** le partitionnement met en oeuvre un algorithme du type K-means ou Kmedoid.

8. Procédé selon la revendication 6, **caractérisé en ce que** la sélection et le partitionnement sont réitérés, les images-clés du cluster le plus compact obtenu à l'itération précédente étant éliminées de l'ensemble traité à cette itération précédente pour fournir un nouvel ensemble sur lequel est effectuée la nouvelle itération.

9. Procédé selon la revendication 8, **caractérisé en ce que** le critère d'arrêt pour les itérations est fonction du nombre d'images-clés n'appartenant pas au cluster le plus compact obtenu ou bien est fonction des moyennes des distances intra-clusters.

10. Procédé de sélection selon la revendication 6 **caractérisé en ce qu'**il comporte une étape de sélection des images-clés partitionnées regroupées autour du premier germe sélectionné, ces images correspondant aux plans d'intérêt majoritaires dans la séquence vidéo.

## Patentansprüche

1. Verfahren zur Auswahl von Cluster-Repräsentanten (14) aus einer Einheit von Schlüsseleinzelbildern einer Videosequenz, um Schlüsseleinzelbilder von mehrheitlichen Einstellungen der Videosequenz zu gruppieren, **dadurch gekennzeichnet, dass** die besagte Auswahl die folgenden Schritte umsetzt:

   - Berechnung einer Anzahl p von Kandidaten durch ein numerisches Verfahren zur Probenahme unter Berücksichtigung einer Auslosungsbeschränkung von mindestens einem Schlüsseleinzelbild einer mehrheitlichen Einstellung,
   - zufällige Auslosung (7) von p Kandidaten in der Einheit von Schlüsseleinzelbildern durch die besagte Methode zur Probenahme,
   - Berechnung der Kosten C (8) für jeden Kandidaten, in Abhängigkeit von der Entfernung der Schlüsseleinzelbilder der Einheit zu jener des Kandidaten, wobei die Entfernung relativ zu den Signaturen ist,

- Auswahl des Kandidaten (k1) (9), so dass die Kosten C minimiert werden,
- Bestimmung einer Untereinheit (lk) (11) aus der Einheit von Schlüsseleinzelbildern derart, dass die Schlüsseleinzelbilder, die die besagte Untereinheit bilden, eine Entfernung zum Kandidaten unterhalb einer Schwelle T (10) haben,
- Bestimmung eines Cluster-Repräsentanten (k2) (13) aus den Schlüsseleinzelbildern der Untereinheit (lk), derart, dass er die Kostenfunktion C für diese Untereinheit minimiert,
- Löschen der Schlüsseleinzelbilder der Untereinheit (lk) (12), um eine neue Einheit von Schlüsseleinzelbildern für mindestens eine neue zufällige Auslosung zu bilden, und Bestimmung eines neuen Cluster-Repräsentanten nach den vorstehenden 5 Schritten.

2. Verfahren nach Anspruch 1, **dadurch gekennzeichnet, dass** die zufällige Auslosung vom Typ Monte-Carlo ist, wobei p nach der Monte-Carlo-Formel berechnet wird.

3. Verfahren nach Anspruch 1, **dadurch gekennzeichnet, dass** die Schlüsseleinzelbilder hinsichtlich ihrer Signatur gewichtet werden, entsprechend der Länge der Einstellungen der Videosequenz, die sie charakterisieren, und dadurch, dass die zufällige Auslosung durch das Gewicht der Schlüsseleinzelbilder verzerrt wird.

4. Verfahren nach Anspruch 1, **dadurch gekennzeichnet, dass** die Kosten C von den quadratischen Entfernungen zwischen der Signatur des Kandidaten und jenen der Schlüsseleinzelbilder der Untereinheit abhängig sind, und dadurch, dass T die Standardabweichung der Verteilung der Entfernungen der Schlüsseleinzelbilder der Einheit des Kandidaten ist.

5. Verfahren nach Anspruch 1, **dadurch gekennzeichnet, dass** die Signatur eines Bildes relativ zu der dominierenden Farbe ist.

6. Verfahren nach Anspruch 1, **dadurch gekennzeichnet, dass** die Sequenz in Einstellungen (1) zerschnitten wird, wobei eine Einstellung durch ein oder mehrere Schlüsseleinzelbilder (2) der besagten Einheit von Schlüsseleinzelbildern dargestellt wird, und mindestens ein Attribut für die Schlüsseleinzelbilder (3) berechnet wird, es eine Teilung der Schlüsseleinzelbilder der Sequenz anhand eines Vergleichs der Attribute der Schlüsseleinzelbilder vornimmt, wobei die besagten Vergleiche anhand der ausgewählten Cluster-Repräsentanten ausgeführt werden.

7. Verfahren nach Anspruch 6, **dadurch gekenn-**

zeichnet, dass die Teilung einen Algorithmus vom Typ k-Means oder k-Medoid ausführt.

8. Verfahren nach Anspruch 6, **dadurch gekennzeichnet, dass** die Auswahl und die Teilung wiederholt werden, indem die Schlüsseleinzelbilder des kompaktesten Cluster-Repräsentanten, der bei der vorhergehenden Iteration erhalten wurde, aus der Einheit entfernt werden, die in dieser vorhergehenden Iteration verarbeitet wurde, um eine neue Einheit zu bilden, an der die neue Iteration ausgeführt wird.

9. Verfahren nach Anspruch 8, **dadurch gekennzeichnet, dass** das Abschaltkriterium für die Iterationen von der Anzahl von Schlüsseleinzelbildern abhängt, die nicht zu dem erhaltenen kompaktesten Cluster-Repräsentanten gehören, oder von den Mittelwerten der Intra-Cluster-Entfernungen abhängt.

10. Verfahren zur Auswahl nach Anspruch 6, **dadurch gekennzeichnet, dass** es einen Schritt zur Auswahl der geteilten Schlüsseleinzelbilder, die rund um den ersten ausgewählten Cluster-Repräsentanten gruppiert sind, umfasst, wobei diese Bilder mit den mehrheitlichen Einstellungen von Interesse in der Videosequenz übereinstimmen.

**Claims**

1. Method for selecting seeds (14) from a set of keyframes of a video sequence for the clustering of keyframes of main shots of the video sequence, **characterised in that** said selection implements following steps:

- calculation of a number p of candidates by a digital sampling method taking into account a draw constraint of at least one key-frame of a main shot,
- random draw (7) of p candidates in the set of key-frames by said sampling method,
- calculation of C (8) for each candidate, depending on the distance of the key-frames of the set to that of the candidate, the distance being relative to the signatures,
- selection of the candidate (k1) (9) minimising the cost C,
- determination of a sub-set (lk) (11) among all key-frames such that the key-frames forming said sub-set have a distance to the candidate lower than a threshold T (10),
- determination of a seed (k2) (13) among the key-images of the sub-set (lk) as it minimises the cost function C for this sub-set,
- removal of key-frames of the sub-set (lk) (12) to form a new set of key-frames for at least one new random draw and determination of a new seed according to the 5 previous steps.

2. Method according to claim 1, **characterised in that** the random draw is of the Monte-Carlo type, p being calculated by the MonteCarlo formula.

3. Method according to claim 1, **characterised in that** the key-frames are weighted, as to their signature, according to the length of the shots of the video sequence that they characterise and **in that** the random draw is biased by the weight of the key-frames.

4. Method according to claim 1, **characterised in that** the cost C is a function of the quadratic distances between the signature of the candidate and those of the key-frames of the sub-set and **in that** T is the standard deviation of the distances of the key-frames of the set to the candidate.

5. Method according to claim 1, **characterised in that** the signature of an image is relative to the dominant colour.

6. Method according to claim 1, **characterised in that** the sequence being split into shots (1), a shot being represented by one or more key-frames (2) of said key-frame set, and at least one attribute being calculated for the key-frames (3), it implements a partitioning of key-frames of the sequence from a comparison of key-frame attributes, said comparisons being made from selected seeds.

7. Method according to claim 6, **characterised in that** the partitioning implements an algorithm of the K-means or Kmedoid type.

8. Method according to claim 6, **characterised in that** the selection and partitioning are reiterated, the key-frames of the most compact cluster obtained at the previous iteration being eliminated from the set processed at this previous iteration to supply a new set on which the new iteration is performed.

9. Method according to claim 8, **characterised in that** the criterion to stop the iterations is a function of the number of key-frames not belonging to the most compact cluster obtained or is a function of the averages of the intra-cluster distances.

10. Selection method according to claim 6, **characterised in that** it comprises: a step for selecting partitioned key-frames clustered around the first selected seed, these images corresponding to the main shots of interest in the video.

**vidéo** → découpage en plans → extraction d'images-clés → extraction d'attributs

1

2

3

sélection des plans d'intérêt → Fabrication du résumé →

4

5

**FIG. 1**

FIG. 2

EP 1 556 794 B1

11

## RÉFÉRENCES CITÉES DANS LA DESCRIPTION

**Littérature non-brevet citée dans la description**

- Video Clustering. **DE VAILAYA et al.** TECHNICAL REPORT MSU-CPS-96-94. Department of Computer Science, Michigan State University, Novembre 1996
- **S.UCHIHASHI ; J.FOOTE ; A.GIRGENSOHN ; J.BORECZSKY.** Vidéo Manga: Generating Semantically Meaningful Video Summaries. *Proc. ACM Multimedia,* Novembre 1999, 383-392
- **JALN K J.** *Algorithms for Clustering Data*
- **H.J ZHANG ; S.Y. TAN ; S.W. SMOLIAR ; G. YI-HONG.** Automatic parsing and indexing of news video. *Multimedia Systems,* 1995, vol. 2 (6), 256-265
- A Framework for Segmentation of Interview Videos. **O. JAVED ; S. KHAN ; Z. RASHEED ; M. SHAH.** IASTED Intl. Conf. Internet and Multimedia Systems and Applications. Las Vegas, Novembre 2000
- **P. MEER ; D. MINTZ ; A. ROSENFELD.** Robust regression methods for computer vision : a review. *International Journal of Computer Vision,* 1991, vol. 6 (1), 59-70